# EUROPEAN PATENT APPLICATION

(11) **EP 4 773 559 A1**
(43) Date of publication of application: **08.07.2026**
(21) Application number: 24869841.7
(22) Date of filing: 12.06.2024
(51) Int. Cl.: H04L 27/26

(54) **DATA TRANSMISSION METHOD, DEVICE, AND STORAGE MEDIUM**

(30) Priority: 27.09.2023 CN 202311283431
(71) Applicant: ZTE Corporation, Shenzhen, Guangdong 518057 (CN)
(72) Inventor: XIN, Yu, Shenzhen, Guangdong 518057 (CN); HUA, Jian, Shenzhen, Guangdong 518057 (CN); BAO, Tong, Shenzhen, Guangdong 518057 (CN)
(74) Representative: Aipex B.V.
(86) International application number: PCT/CN2024/098727
(87) International publication number: WO 2025/066279

(57) **Abstract**

Provided are a data transmission method, a device, and a storage medium. The method includes dividing to-be-transmitted data into N first sequences, where the n-th first sequence includes k(n) data elements, k(n) is a positive integer, n = 1, 2, ..., N, and N is an integer greater than or equal to 2; performing inverse Fourier transforms on the N first sequences separately to obtain N second sequences; performing inverse Fourier transforms on the N second sequences to obtain a target time-domain data sequence, where each of the inverse Fourier transforms includes extracting N data elements from the N second sequences in sequence and performing zero insertion and inverse Fourier transform on the N data elements in sequence, where each of the N data elements is extracted from a respective one of the N second sequences; and transmitting the target time-domain data sequence on a preconfigured time-frequency resource.

## Description

### TECHNICAL FIELD

The present application relates to the field of communications, for example, a data transmission method, a device, and a storage medium.

### BACKGROUND

In 5G communication technology, cyclic prefix-orthogonal frequency division multiplexing (CP-OFDM) is used as the fundamental waveform, and different parameter sets (Numerology) may be used between two adjacent subbands, destroying the orthogonality between subcarriers and bringing a new interference problem. To address the interference problem, one relatively straightforward approach is to insert a guard band between two transmission bands having different Numerologies; however, this approach wastes frequency resources. It is urgent to solve the problems of how to design a unified waveform architecture to flexibly integrate multiple waveforms and how to flexibly support applications with different channel bandwidths.

### SUMMARY

In view of this, embodiments of the present application provide a data transmission method, a device, and a storage medium, reducing the resources occupied by the guard interval, reducing inter-system or inter-subband interference, and improving spectrum efficiency.

Embodiments of the present application provide a data transmission method.

The method includes dividing to-be-transmitted data into N first sequences, where the n-th first sequence includes k(n) data elements, k(n) is a positive integer, n = 1, 2, ..., N, and N is an integer greater than or equal to 2; performing inverse Fourier transforms on the N first sequences separately to obtain N second sequences; performing inverse Fourier transforms on the N second sequences to obtain a target time-domain data sequence, where each of the inverse Fourier transforms includes extracting N data elements from the N second sequences in sequence and performing zero insertion and inverse Fourier transform on the N data elements in sequence, where each of the N data elements is extracted from a respective one of the N second sequences; and transmitting the target time-domain data sequence on a preconfigured time-frequency resource.

Embodiments of the present application provide a communication device. The communication device includes a memory and at least one processor.

The memory is configured to store at least one program.

When executed by the at least one processor, the at least one program causes the at least one processor to perform the method of any previous embodiment of the present application.

Embodiments of the present application provide a storage medium storing a computer program which, when executed by a processor, causes the processor to perform the method of any previous embodiment of the present application.

### BRIEF DESCRIPTION OF DRAWINGS

FIG. 1 is a flowchart of a data transmission method according to embodiments of the present application.
FIG. 2 is a flowchart of generating a target time-domain data sequence according to embodiments of the present application.
FIG. 3 is a flowchart of generating a target time-domain data sequence according to embodiments of the present application.
FIG. 4 is a flowchart of generating a target time-domain data sequence according to embodiments of the present application.
FIG. 5 is a flowchart of generating a target time-domain data sequence according to embodiments of the present application.
FIG. 6 is a flowchart of generating a target time-domain data sequence according to embodiments of the present application.
FIG. 7 is a flowchart of generating a target time-domain data sequence according to embodiments of the present application.
FIG. 8 is a flowchart of transmission of to-be-transmitted data according to embodiments of the present application.
FIG. 9 is a block diagram of a data transmission apparatus according to embodiments of the present application.
FIG. 10 is a diagram illustrating the structure of a communication device according to embodiments of the present application.

### DETAILED DESCRIPTION

Embodiments of the present application are described hereinafter in conjunction with drawings. The present application is described hereinafter in conjunction with embodiments and the drawings. The examples described hereinafter are intended to explain the present application and not to limit the scope of the present application.

Long-term evolution (LTE) is a 4G (Fourth Generation) wireless cellular communication technology. LTE uses orthogonal frequency-division multiplexing (OFDM) technology. Time-frequency resources formed of subcarriers and OFDM symbols constitute wireless physical time-frequency resources of the LTE system. The OFDM technology has been widely used in wireless communications. By using a cyclic prefix (CP), a CP-OFDM system can effectively address multipath delay issues and divide a frequency-selective channel into a set of parallel flat channels, greatly simplifying channel estimation and providing relatively high channel estimation accuracy. However, the performance of a CP-OFDM system is relatively sensitive to frequency offset and time offset between adjacent subbands, mainly because the system has relatively large spectral leakage, thereby easily causing inter-subband interference. An LTE system uses guard intervals in the frequency domain, resulting in a lower spectral efficiency. Therefore, new technologies are required to suppress out-of-band leakage.

In 5G NR, CP-OFDM is still used as the fundamental waveform, and different Numerologies may be used between two adjacent subbands, destroying the orthogonality between subcarriers and bringing a new interference problem. To address the interference problem, one relatively straightforward approach is to insert a guard band between two transmission bands having different Numerologies; however, this approach wastes frequency resources.

Future 6G services will operate over a wide range of frequency bands and will be deployed in various manners. 6G services require not only multi-bandwidth channels but also waveform schemes suitable for different scenarios. Implementing each waveform scheme independently increases the costs of base stations and terminals. It is urgent to solve the problems of how to design a unified waveform architecture to flexibly integrate multiple waveforms and how to flexibly support applications with different channel bandwidths.

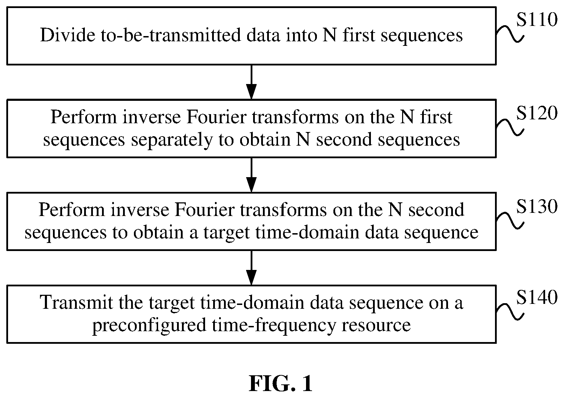

In an embodiment, FIG. 1 is a flowchart of a data transmission method according to embodiments of the present application. This embodiment is applicable to scenarios requiring flexible support for multiple bandwidth channels and multiple waveforms. As shown in FIG. 1, this embodiment includes S110 to S140.

In S110, to-be-transmitted data is divided into N first sequences.

The n-th first sequence includes k(n) data elements, k(n) is a positive integer, n = 1, 2, ..., N, and N is an integer greater than or equal to 2. In an example, the to-be-transmitted data is a data sequence to be sent from a transmitting end to a receiving end. The to-be-transmitted data may be frequency-domain data or time-domain data. In an example, when the to-be-transmitted data is frequency-domain data, the to-be-transmitted data is divided into first sequences that are also frequency-domain data. In an example, when the to-be-transmitted data is time-domain data, it is feasible to divide the to-be-transmitted data into N data groups that are also time-domain data and then perform Fourier transform on the N time-domain data groups to obtain N first sequences; or it is feasible to perform Fourier transform on the to-be-transmitted data to obtain frequency-domain data and then divide the frequency-domain data to obtain N first sequences.

In S120, inverse Fourier transforms are performed on the N first sequences separately to obtain N second sequences.

In S130, inverse Fourier transforms are performed on the N second sequences to obtain a target time-domain data sequence.

Each of the inverse Fourier transforms includes extracting N data elements from the N second sequences in sequence and performing zero insertion and inverse Fourier transform on the N data elements in sequence, where each of the N data elements is extracted from a respective one of the N second sequences.

Inverse Fourier transforms are performed on the N first sequences to obtain N second sequences; N first data elements are extracted one to one from the N second sequences in sequence to form N data elements; and then Zero insertion is performed on the N data elements and an inverse Fourier transform is performed on the Zero-inserted N data element; subsequently, N second data elements are extracted one to one from the N second sequences in sequence to form another N data elements; and then Zero insertion is performed on the another N data elements and an inverse Fourier transform is performed on the Zero-inserted N data element, the above operations are repeated until all data elements in the N second sequences have been processed by an inverse Fourier transform, such that a target time-domain data sequence is obtained. The total size of the inverse Fourier transforms on the N second sequences is the same as the number of data elements in the second sequences. When performing inverse Fourier transforms on the second sequences, it is feasible to adjust the subband data mapping spacing and a size of an inverse Fourier transform so that the subbands are mapped to corresponding frequency-domain indices in the channel bandwidth.

In S140, the target time-domain data sequence is transmitted on a preconfigured time-frequency resource.

In an embodiment, a channel bandwidth includes N subbands that correspond to the N first sequences one to one.

In an embodiment, in response to a subcarrier in a subband of N subbands being a zero-frequency index of a baseband, data elements extracted in sequence from second sequences corresponding to the N subbands are mapped to a zero-frequency index in the inverse Fourier transform processing.

In an embodiment, the zero-frequency index of the baseband is the zero-frequency index of the channel bandwidth. In an example, when an index of a subcarrier within a subband corresponds to the zero-frequency index of the baseband, the data elements extracted in sequence from the second sequences corresponding to the subband are mapped to the zero-frequency index in the inverse Fourier transform processing. Alternatively, the zero-frequency index of the baseband is the zero-frequency index of the channel bandwidth. The subband index may be aligned with the actual frequency-domain index in the secondary inverse Fourier transform processing. Here the secondary inverse Fourier transform refers to the inverse Fourier transform on the second sequences.

In an embodiment, the zero insertion includes inserting Q(n) zeros between each two adjacent data elements of the N data elements.

In an embodiment, zeros of the same number are inserted between each two adjacent data elements of the N data elements. In an example, when between every two adjacent data elements of the N data elements, zeros of the same number are inserted, Q(n) can be understood as a constant.

In an embodiment, after the zero insertion on the N data elements, the spacing between two adjacent non-zero data elements in the frequency domain is equal to the bandwidth of a subband.

In an embodiment, the N subbands have the same bandwidth.

In an embodiment, the spacing between frequency-domain indices to which two adjacent data elements of the N data elements are mapped respectively is the bandwidth of a subband in the inverse Fourier transform processing.

In an embodiment, the spacing between frequency-domain indices to which any two data elements of the N data elements are mapped respectively is a subband spacing between two subbands corresponding to the two data elements in the inverse Fourier transform processing, where the subband spacing is the spacing between identical indices in the two subbands.

In an embodiment, zeros of different numbers are inserted between each two adjacent data elements of the N data elements, and the N subbands have different bandwidths. In an example, between every two adjacent data elements of the N data elements, zeros of the same number or zeros of different numbers may be inserted. In this manner, by configuring the data interval of the secondary inverse Fourier transform, it is possible to make the subband spacing exactly equal to the subband width. Here the secondary inverse Fourier transform refers to the inverse Fourier transform on the second sequences.

In an embodiment, before performing inverse Fourier transforms on the N first sequences separately, the method also includes performing zero-padding at both ends on the N first sequences separately. Each zero-padded first sequence includes M*s(n) data elements, M is a positive integer, s(n) ≥ k(n), and the size of the inverse Fourier transform on each first sequence is M*s(n). In an example, zero-padding is first performed at both ends of each first sequence to obtain zero-padded first sequences; and then inverse Fourier transforms are performed on the zero-padded first sequences. In an example, each zero-padded first sequence includes M*s(n) data elements. Correspondingly, the size of the inverse Fourier transform is M*s(n). That is, the inverse Fourier transform on the first sequences is an oversampled inverse Fourier transform.

In an embodiment, before performing inverse Fourier transforms on the N second sequences, the method also includes performing frequency shifting on the N second sequences.

In an embodiment, M*s(n) inverse Fourier transforms are performed on the N second sequences. In an example, before the inverse Fourier transforms on the N first sequences, zero-padding is performed at both ends of each first sequence to obtain zero-padded first sequences; then inverse Fourier transforms are performed on the zero-padded first sequences to obtain N second sequences; and then the inverse Fourier transforms are performed on the N second sequences, where each second sequence includes M*s(n) data elements. Each of the inverse Fourier transforms includes extracting N data elements from the N second sequences in sequence and performing zero insertion and inverse Fourier transform on the N data elements in sequence, where each of the N data elements is extracted from a respective one of the N second sequences. That is, the size of the inverse Fourier transform on each second sequence is M*s(n).

In an embodiment, after the zero insertion on the N data elements and before the inverse Fourier transform on the N data elements, the method also includes performing zero-padding at both ends on zero-inserted data elements separately.

In an embodiment, for the n-th first sequence, in response to *(s(n)* - *k(n))*/*s(n)* >= *p* * *α,* M = 1; alternatively, in response to *(s(n) - k(n))*/*s(n) < p* * *α,* M = 2. Here α denotes a roll-off factor of a root raised cosine filter in polyphase filtering, and p denotes an error coefficient. In an example, p may be 1. The oversampling factor may be selected by determining whether the roll-off portion of the filter causes inter-subband interference, thereby preventing inter-subband interference.

In an embodiment, in response to the n-th first sequence including *k*(*n*) = *a* * 2*^{b}* data elements, the subcarrier spacing of each of the inverse Fourier transforms on the N second sequences is 2*^{b}* times the subcarrier spacing of the n-th subband, and the size of each inverse Fourier transform satisfies *nifft = Nifft*(*n*)/2*^{b}.* Here *Nifft*(*n*) denotes the total size of the inverse Fourier transforms on the N first sequences, a and b are positive integers, and a is an odd number. The advantage of this approach is that the minimum size of the secondary inverse Fourier transform that matches the subband bandwidth can be determined, thereby achieving the effect of the subband bandwidth in the secondary inverse Fourier transform while reducing the complexity.

In an embodiment, the target time-domain data sequence is formed by concatenating time-domain data sequences generated from the inverse Fourier transforms, where the time-domain data sequences are concatenated in an overlap-add manner.

In an embodiment, the time-domain data sequences are concatenated at a concatenation interval of *Nifft*(*n*)/*M*/*s*(*n*)*.*

In an embodiment, each first sequence includes k(n) data elements, and k(n) satisfies one of the following conditions: any positive integer; an integer multiple of one resource block (RB); 2 to the power of i; the ratio of two adjacent k(n) values is 2 to the power of i; or all k(n) values are the same. Each first sequence includes k(n) data elements. In an example, k(n) is any positive integer. In an example, k(n) is an integer multiple of 12, that is, an integer multiple of one RB. In an example, k(n) satisfies 2 to the power of i (2'), where i is an integer greater than or equal to 0. In an example, the ratio of two k(n) values is 2 to the power of i (2ⁱ), where i is an integer greater than or equal to 0. In an example, each first sequence includes the same number k(n) of data elements.

In an embodiment, zero padding at both ends is performed on each first sequence, and [*M * s*(*n*) - *k*(*n*)]/2 zero data elements are added to each end of each second sequence.

In an embodiment, the size of the inverse Fourier transform on each first sequence satisfies one of the following conditions: the ratio of the sizes of the inverse Fourier transforms on two adjacent first sequences is 2 to the power of i; or the sizes of the inverse Fourier transforms on different first sequences are the same. i is an integer. In an example, M*s(n)-point inverse Fourier transforms are performed on the third sequences separately, and the ratio of the sizes of the inverse Fourier transforms on two adjacent third sequences is 2 to the power of i (2ⁱ), where i is an integer greater than or equal to 0. In an example, M*s(n)-point inverse Fourier transforms are performed on the third sequences separately, and the sizes of the inverse Fourier transforms on different third sequences are the same.

In an embodiment, the to-be-transmitted data includes at least constellation point modulated data, and the to-be-transmitted data also includes at least one reference signal data element. In an embodiment, the to-be-transmitted data may include constellation point modulated data. In an embodiment, the to-be-transmitted data includes constellation point modulated data and at least one reference signal data element.

In an embodiment, performing inverse Fourier transform on the N second sequences to form the target time-domain data sequence includes performing frequency-domain zero-padding and cyclic shifting on P other initial frequency-domain data sequences in sequence to obtain P other target frequency-domain data sequences; and performing inverse Fourier transform on the N second sequences and the P other target frequency-domain data sequences to form the target time-domain data sequence. The P other target frequency-domain data sequences include data obtained by M-fold frequency-domain oversampling and are not included in data sequences generated from the to-be-transmitted data. In an example, inverse Fourier transforms are performed on the N third sequences and the P other target frequency-domain data sequences to form the target time-domain data sequence. The P other initial frequency-domain data sequences may be data obtained by M-fold frequency-domain oversampling or may be data sequences not generated from the to-be-transmitted data. In an example, frequency-domain zero padding and cyclic shifting are performed in sequence on P other initial frequency-domain data sequences to obtain P other target frequency-domain data sequences; and then inverse Fourier transform is performed on the N third sequences and the P other target frequency-domain data sequences to form the target time-domain data sequence.

In an embodiment, the total size of the inverse Fourier transforms on the N second sequences is greater than N, and the size of each inverse Fourier transform is greater than or equal to M.

In an embodiment, the inverse Fourier transforms includes for subbands having different subcarrier spacings, using the length of a second sequence corresponding to a subband with the minimum subcarrier spacing as the reference length; and for second sequences corresponding to subbands with non-minimum subcarrier spacings, selecting at least two second sequences, concatenating the at least two second sequences to form new N second sequences that each have the same length as the reference length, and performing inverse Fourier transforms on the new N second sequences. Subbands with different subcarrier spacings represent first sequences including different numbers of data elements.

In an embodiment, each first sequence is transmitted within a frequency-domain resource block, and the frequency-domain resource block includes Z subcarriers. The number of data elements in each of the N second sequences is: M*s(n); or a value greater than or equal to M times the number of subcarriers in the frequency-domain resource block. In an example, each of the N second sequences includes M*s(n) data elements; or includes data elements of a number greater than or equal to M times the number of subcarriers in the frequency-domain resource block.

In an embodiment, a zero-frequency index corresponding to the first sequence in the inverse Fourier transform processing is within the range of a corresponding frequency-domain resource block. Zero-frequency indices when performing inverse Fourier transforms on different first sequences are different. In an embodiment, the zero-frequency index refers to a zero subcarrier (that is, the 0th subcarrier or 0-indexed subcarrier) in a frequency-domain resource block.

In an embodiment, zero-frequency indices in the inverse Fourier transform processing fall at one subcarrier in frequency-domain resource blocks respectively. In an embodiment, the zero-frequency index (that is, the zero subcarrier) at which an inverse Fourier transform is performed in each original data sequence is a subcarrier in a respective frequency-domain resource block.

In an embodiment, the frequency-domain resource blocks include all or some of the frequency-domain resource blocks within the channel bandwidth; and the to-be-transmitted data includes all or some of the to-be-transmitted data within the channel bandwidth.

In an embodiment, the data transmission method also includes filtering the target time-domain data sequence. The filtering includes one of single-phase filtering or polyphase filtering.

In an embodiment, a filter function used in the polyphase filtering includes one of the following: a root raised cosine function, a raised cosine function, a rectangular function, or an isotropic orthogonal transform algorithm (IOTA) function.

In an embodiment, the data transmission method also includes performing windowing on the target time-domain data sequence.

### Example one

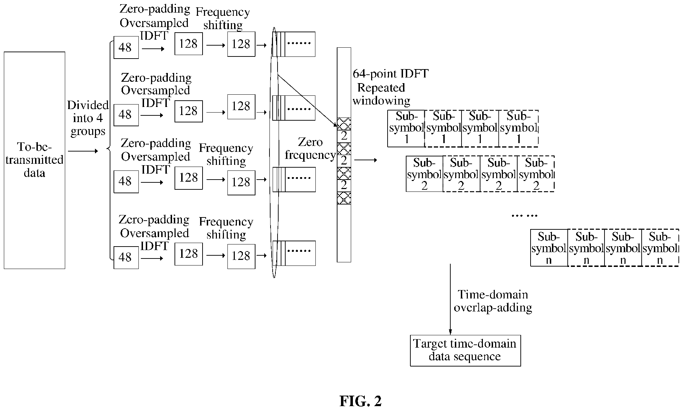

In an example, FIG. 2 is a flowchart of generating a target time-domain data sequence according to embodiments of the present application. This example describes the generation process of the target time-domain data sequence. In this example, 4 first sequences are provided, each first sequence includes 48 data elements, and the zero-padding length is 40 in zero-padding at both ends for each first sequence.

As shown in FIG. 2, in this example, the to-be-transmitted data is divided into 4 first sequences. Each first sequence includes 48 data elements. 40 zero subcarriers are added to each of both ends of each first sequence to form 4 zero-padded first sequences, each zero-padded first sequence having 128 points. It is assumed that the zero-frequency index of the channel bandwidth falls at the index of the zero subcarrier to which the second group of data is mapped during the inverse Fourier transform. Frequency shifting is performed on the first, third, and fourth groups of data. Then 128-point inverse Fourier transforms are performed to form 4 second sequences.

Then 4 data elements are extracted one to one from the 4 second sequences in sequence and subjected to an oversampled 64-point inverse Fourier transform. The zero-frequency index is aligned with the second group of data. The 4 data elements are arranged in sequence. 2 zeros are inserted between every two data elements, 54 zeros are added at the remaining subcarrier indices, and then an inverse fast Fourier transform (IFFT) is performed to obtain sub-symbols. A total of 128 64-point IFFTs are performed to obtain 128 sub-symbols. Each sub-symbol is then repeatedly extended by a factor of 4 and subjected to a filtering, that is, point-wise multiplication with a filter. Finally, the 128 sub-symbols are concatenated in the time domain to form a target time-domain data sequence, where the concatenation is performed by overlap-adding, and the overlap-adding interval during the concatenation is 8 points, that is, 1/8 the length of a sub-symbol. The target time-domain data sequence is transmitted on a time-frequency resource.

### Example two

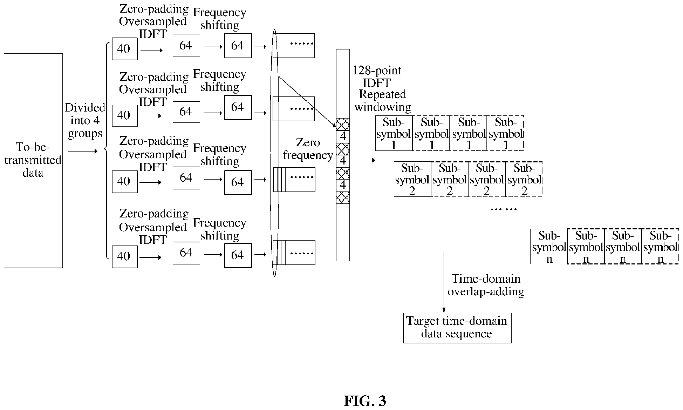

In an example, FIG. 3 is a flowchart of generating a target time-domain data sequence according to embodiments of the present application. This example describes the generation process of the target time-domain data sequence. In this example, 4 first sequences are provided, each first sequence includes 40 data elements, and the zero-padding length is 12 in zero-padding at both ends for each first sequence.

As shown in FIG. 3, in this example, the to-be-transmitted data is divided into 4 first sequences. Each first sequence includes 40 data elements. 12 zero subcarriers are added to each of both ends of each first sequence to form 4 zero-padded first sequences, each zero-padded first sequence having 64 points. It is assumed that the zero-frequency index of the channel bandwidth falls at the index of the zero subcarrier to which the second group of data is mapped during the inverse Fourier transform. Frequency shifting is performed on the first, third, and fourth groups of data. Then 64-point inverse Fourier transforms are performed to form 4 second sequences.

Then 4 data elements are extracted one to one from the 4 second sequences in sequence and subjected to an oversampled 128-point inverse Fourier transform. The zero-frequency index is aligned with the second group of data. The 4 data elements are arranged in sequence. 4 zeros are inserted between every two data elements, 112 zeros are added at the remaining subcarrier indices, and then an inverse fast Fourier transform (IFFT) is performed to obtain sub-symbols. A total of 64 128-point IFFTs are performed to obtain 64 sub-symbols. Each sub-symbol is then repeatedly extended by a factor of 4. Finally, 64 sub-symbols are concatenated in the time domain to form a target time-domain data sequence, where a concatenation interval is 16 points, that is, 1/8 the length of a sub-symbol. The target time-domain data sequence is transmitted on a time-frequency resource.

### Example three

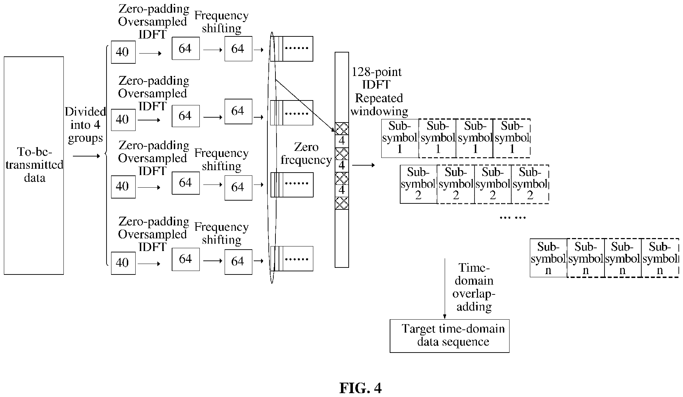

In an example, FIG. 4 is a flowchart of generating a target time-domain data sequence according to embodiments of the present application. This example describes the generation process of the target time-domain data sequence. In this example, 4 first sequences are provided, each first sequence includes 40 data elements, and the zero-padding length is 12 in zero-padding at both ends for each first sequence.

As shown in FIG. 4, in this example, the to-be-transmitted data is divided into 4 first sequences. Each first sequence includes 40 data elements. 12 zero subcarriers are added to each of both ends of each first sequence to form 4 zero-padded first sequences, each zero-padded first sequence having 64 points. It is assumed that the zero-frequency index of the channel bandwidth falls within 0.5 subcarrier indices preceding the index of the zero subcarrier to which the second group of data is mapped during the inverse Fourier transform. Frequency shifting is performed on the first, second, third, and fourth groups of data. Then 64-point inverse Fourier transforms are performed to form 4 second sequences.

Then 4 data elements are extracted one to one from the 4 second sequences in sequence and subjected to an oversampled 128-point inverse Fourier transform. The zero-frequency index is aligned with the second group of data. The 4 data elements are arranged in sequence. 4 zeros are inserted between every two data elements, 112 zeros are added at the remaining subcarrier indices, and then an inverse fast Fourier transform (IFFT) is performed to obtain sub-symbols. A total of 64 128-point IFFTs are performed to obtain 64 sub-symbols. Each sub-symbol is then repeatedly extended by a factor of 4. Finally, 64 sub-symbols are concatenated in the time domain to form a target time-domain data sequence, where a concatenation interval is 16 points, that is, 1/8 the length of a sub-symbol. The target time-domain data sequence is transmitted on a time-frequency resource.

### Example four

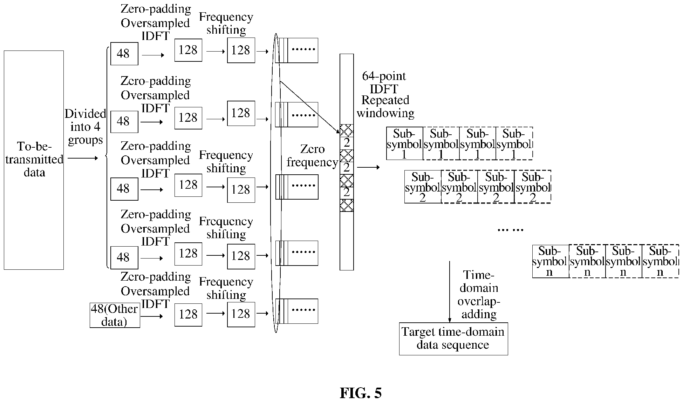

In an example, FIG. 5 is a flowchart of generating a target time-domain data sequence according to embodiments of the present application. This example describes the generation process of the target time-domain data sequence. In this example, 4 first sequences are provided, each first sequence includes 48 data elements, and the zero-padding length is 40 in zero-padding at both ends for each first sequence.

As shown in FIG. 5, in this example, the to-be-transmitted data is divided into 4 first sequences. Each first sequence includes 48 data elements. 40 zero subcarriers are added to each of both ends of each first sequence to form 4 zero-padded first sequences, each zero-padded first sequence having 128 points. It is assumed that the zero-frequency index of the channel bandwidth falls at the index of the zero subcarrier to which the second group of data is mapped during the inverse Fourier transform. Frequency shifting is performed on the first, third, and fourth groups of data. Then 128-point inverse Fourier transforms are performed to form 4 second sequences.

Subsequently, subband-level inverse Fourier transform and polyphase filtering are performed on the 4 fourth sequences and other groups of data to form a target time-domain data sequence. Other groups of data include 48 data elements and are also subjected to zero-padding, inverse discrete Fourier transform (IDFT), frequency shifting, and other operations before undergoing subband-level processing.

The process of forming the target time-domain data sequence includes that 5 data elements are extracted one to one from the 5 second sequences in sequence and subjected to an oversampled 64-point inverse Fourier transform. The zero-frequency index is aligned with the second group of data. The 5 data elements are arranged in sequence. 2 zeros are inserted between every two data elements, 41 zeros are added at the remaining subcarrier indices, and then the inverse fast Fourier transform (IFFT) is performed to obtain sub-symbols. A total of 128 64-point IFFTs are performed to obtain 128 sub-symbols. Each sub-symbol is then repeatedly extended by a factor of 4. Finally, 128 sub-symbols are concatenated in the time domain to form a target time-domain data sequence, where a concatenation interval is 8 points, that is, 1/8 the length of a sub-symbol. The target time-domain data sequence is transmitted on a time-frequency resource.

### Example five

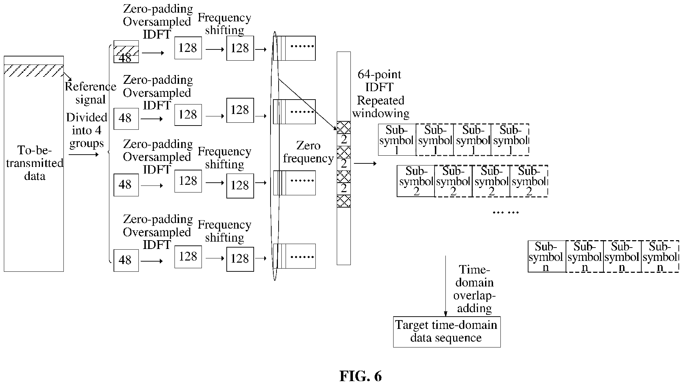

In an example, FIG. 6 is a flowchart of generating a target time-domain data sequence according to embodiments of the present application. This example describes the generation process of the target time-domain data sequence. In this example, four first sequences are provided, each first sequence includes 48 data elements, the first first sequence (the first of the four first sequences) includes 24 reference signals, and the zero-padding length is 40 in zero-padding at both ends for each first sequence.

As shown in FIG. 6, in this example, the to-be-transmitted data is divided into four first sequences. Each first sequence includes 48 data elements. The first first sequence includes 24 reference signals. 40 zero subcarriers are added to each of both ends of each first sequence to form 4 zero-padded first sequences, each zero-padded first sequence having 128 points. It is assumed that the zero-frequency index of the channel bandwidth falls at the index of the zero subcarrier to which the second group of data is mapped during the inverse Fourier transform. Frequency shifting is performed on the first, third, and fourth groups of data. Then 128-point inverse Fourier transforms are performed to form 4 data sequences.

Then 4 data elements are extracted one to one from the 4 second sequences in sequence and subjected to an oversampled 64-point inverse Fourier transform. The zero-frequency index is aligned with the second group of data. The 4 data elements are arranged in sequence. 2 zeros are inserted between every two data elements, 54 zeros are added at the remaining subcarrier indices, and then the inverse fast Fourier transform (IFFT) is performed to obtain sub-symbols. A total of 128 64-point IFFTs are performed to obtain 128 sub-symbols. Each sub-symbol is then repeatedly extended by a factor of 4. Finally, 128 sub-symbols are concatenated in the time domain to form a target time-domain data sequence, where a concatenation interval is 8 points, that is, 1/8 the length of a sub-symbol. The target time-domain data sequence is transmitted on a time-frequency resource.

### Example six

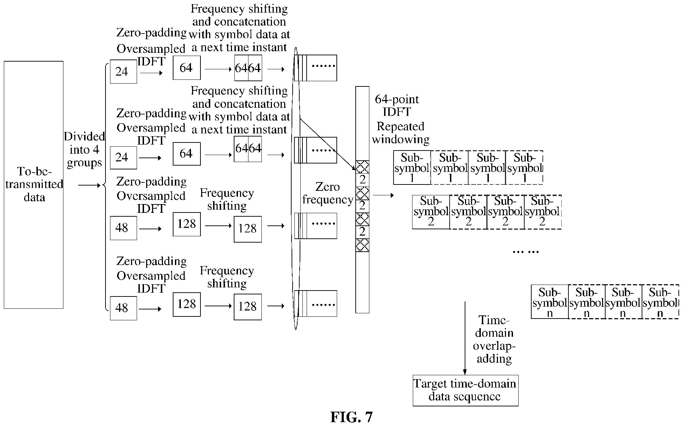

In an example, FIG. 7 is a flowchart of generating a target time-domain data sequence according to embodiments of the present application. This example describes the generation process of the target time-domain data sequence. In this example, 4 first sequences are provided, the first two first sequences each include 24 data elements, that is, 2 RBs, the last two first sequences each include 48 data elements, that is, 4 RBs, the zero-padding length is 20 in zero-padding at both ends for each of the first two first sequences, and the zero-padding length is 40 in zero-padding at both ends for each of the last two first sequences.

As shown in FIG. 7, in this example, the to-be-transmitted data is divided into 4 first sequences. Each of the first two first sequences includes 24 data elements, that is, 2 RBs. Each of the last two first sequences includes 48 data elements, that is, 4 RBs. 20 zero subcarriers are added to each of both ends of each of the first two first sequences, each zero-padded first sequence having 64 points. 40 zero subcarriers are added to both ends of each of the last two first sequences, each zero-padded first sequence having 128 points. Thus, 4 zero-padded first sequences are formed in total. Then the 64-point inverse Fourier transform is performed on each of the first two first sequences, and the 128-point inverse Fourier transform is performed on each of the last two first sequences. It is assumed that the zero-frequency index of the channel bandwidth falls at the index of the zero subcarrier to which the second group of data is mapped during the inverse Fourier transform. Frequency shifting is performed on the first, third, and fourth groups of data. The first two groups of data are each concatenated with symbol data at a next time instant to form two groups of data each having a length of 128 points and together with the last two groups of data, form 4 second sequences each having 128 points.

Then 4 data elements are extracted one to one from the 4 second sequences in sequence and subjected to an oversampled 64-point inverse Fourier transform. The zero-frequency index is aligned with the second group of data. The 4 data elements are arranged in sequence. 2 zeros are inserted between every two data elements, 54 zeros are added at the remaining subcarrier indices, and then the inverse fast Fourier transform (IFFT) is performed to obtain sub-symbols. A total of 128 64-point IFFTs are performed to obtain 128 sub-symbols. Each sub-symbol is then repeatedly extended by a factor of 4. Finally, 128 sub-symbols are concatenated in the time domain to form a target time-domain data sequence, where a concatenation interval is 8 points, that is, 1/8 the length of a sub-symbol. The target time-domain data sequence is transmitted on a time-frequency resource.

### Example seven

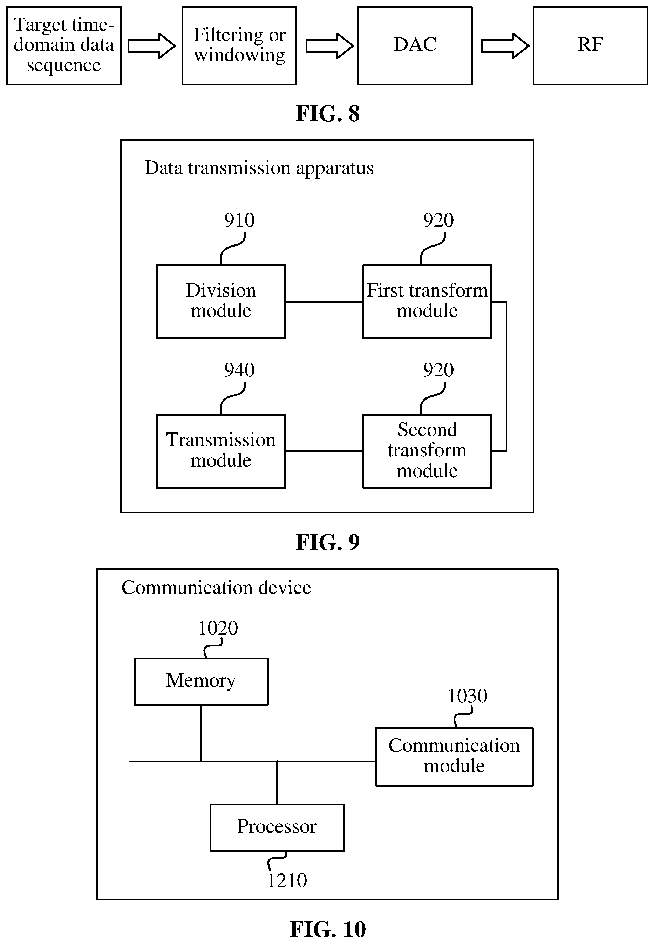

In an example, FIG. 8 is a flowchart of transmission of to-be-transmitted data according to embodiments of the present application. As shown in FIG. 8, windowing or filtering is performed on the to-be-transmitted data, followed by digital-to-analog conversion (DAC) and radio frequency (RF) processing.

As shown in FIG. 8, transmitting the target time-domain data sequence corresponding to the to-be-transmitted data also includes performing windowing or filtering on the target time-domain data sequence corresponding to the to-be-transmitted data, followed by DAC and RF processing.

The windowing processing includes grouping a target time-domain data sequence corresponding to the to-be-transmitted data, performing periodic extension, performing pointwise multiplication with a preset function, and overlap-adding the groups.

The filtering is single-phase filtering or polyphase filtering. The polyphase filtering includes filtering each of the new N data sequences.

In an embodiment, FIG. 9 is a block diagram of a data transmission apparatus according to embodiments of the present application. As shown in FIG. 9, the data transmission apparatus of this embodiment includes a division module 910, a first transform module 920, a second transform module 930, and a transmission module 940.

The division module 910 is configured to divide to-be-transmitted data into N first sequences.

The n-th first sequence includes k(n) data elements, k(n) is a positive integer, n = 1, 2, ..., N, and N is an integer greater than or equal to 2.

The first transform module 920 is configured to perform inverse Fourier transforms on the N first sequences separately to obtain N second sequences.

The second transform module 930 is configured to perform inverse Fourier transforms on the N second sequences to obtain a target time-domain data sequence.

Each of the inverse Fourier transforms includes extracting N data elements from the N second sequences in sequence and performing zero insertion and inverse Fourier transform on the N data elements in sequence, where each of the N data elements is extracted from a respective one of the N second sequences.

The transmission module 940 is configured to transmit the target time-domain data sequence on a preconfigured time-frequency resource.

In an embodiment, a channel bandwidth includes N subbands that correspond to the N first sequences one to one.

In an embodiment, in response to a subcarrier in a subband of N subbands being a zero-frequency index of a baseband, data elements extracted in sequence from second sequences corresponding to the N subbands are mapped to a zero-frequency index in the inverse Fourier transform processing.

In an embodiment, the zero-frequency index of the baseband is also the zero-frequency index of the channel bandwidth.

In an embodiment, the zero insertion includes inserting Q(n) zeros between each two adjacent data elements of the N data elements.

In an embodiment, zeros of the same number are inserted between each two adjacent data elements of the N data elements.

In an embodiment, after the zero insertion on the N data elements, the spacing between two adjacent non-zero data elements in the frequency domain is equal to the bandwidth of a subband.

In an embodiment, the N subbands have the same bandwidth.

In an embodiment, the spacing between frequency-domain indices to which two adjacent data elements of the N data elements are mapped respectively is the bandwidth of a subband in the inverse Fourier transform processing.

In an embodiment, the spacing between frequency-domain indices to which any two data elements of the N data elements are mapped respectively is a subband spacing between two subbands corresponding to the two data elements in the inverse Fourier transform processing, where the subband spacing is the spacing between identical indices in the two subbands.

In an embodiment, zeros of different numbers are inserted between each two adjacent data elements of the N data elements, and the N subbands have different bandwidths.

In an embodiment, before performing inverse Fourier transforms on the N first sequences separately, the method also includes performing zero-padding at both ends on the N first sequences separately, where each zero-padded first sequence includes M*s(n) data elements, M is a positive integer, s(n) ≥ k(n), and the size of the inverse Fourier transform on each first sequence is M*s(n).

In an embodiment, before performing inverse Fourier transforms on the N second sequences, the method also includes performing frequency shifting on the N second sequences.

In an embodiment, M*s(n) inverse Fourier transforms are performed on the N second sequences.

In an embodiment, after the zero insertion on the N data elements and before the inverse Fourier transform on the N data elements, the method also includes performing zero-padding at both ends on zero-inserted data elements separately.

In an embodiment, for the n-th first sequence, in response to *(s(n)* - *k(n))*/*s(n)* >= *p * α,* M = 1; alternatively, in response to *(s(n) - k(n))*/*s(n) < p* * *α,* M = 2. Here α denotes a roll-off factor of a root raised cosine filter in polyphase filtering, and p denotes an error coefficient.

In an embodiment, in response to the n-th first sequence including *k(n) = a* _{*} 2*^{b}* data elements, the subcarrier spacing of the inverse Fourier transform on each of the N second sequences is 2*^{b}* times the subcarrier spacing of the n-th subband, and the size of each of inverse Fourier transforms on the N second sequences satisfies *nifft = Nifft*(*n*)/2*^{b}.* Here *Nifft*(*n*) denotes the total size of inverse Fourier transforms on the N first sequence, a and b are positive integers, and a is an odd number.

In an embodiment, the target time-domain data sequence is formed by concatenating time-domain data sequences generated from the inverse Fourier transforms, where the time-domain data sequences are concatenated in an overlap-add manner.

In an embodiment, the time-domain data sequences are concatenated at a concatenation interval of *Nifft*(*n*)/*M*/*s*(*n*).

In an embodiment, each first sequence includes k(n) data elements, and k(n) satisfies one of the following conditions: any positive integer; an integer multiple of one resource block (RB); 2 to the power of i; the ratio of two adjacent k(n) values is 2 to the power of i; or all k(n) values are the same.

In an embodiment, zero padding at both ends is performed on each first sequence, and [*M* * *s*(*n*) - *k*(*n*)]/2 zero data elements are added to each end of each second sequence.

In an embodiment, the size of the inverse Fourier transform on each first sequence satisfies one of the following conditions: the ratio of the sizes of the inverse Fourier transforms on two adjacent first sequences is 2 to the power of i; or the sizes of the inverse Fourier transforms on different first sequences are the same, where i is an integer.

In an embodiment, performing inverse Fourier transform on the N second sequences to form the target time-domain data sequence includes performing frequency-domain zero-padding and cyclic shifting on P other initial frequency-domain data sequences in sequence to obtain P other target frequency-domain data sequences; and performing inverse Fourier transforms on the N second sequences and the P other target frequency-domain data sequences to form the target time-domain data sequence. The P other target frequency-domain data sequences include data obtained by M-fold frequency-domain oversampling and are not included in data sequences generated from the to-be-transmitted data.

In an embodiment, the total size of the inverse Fourier transforms on the N second sequences is greater than N, and the size of each of the inverse Fourier transforms is greater than or equal to M.

In an embodiment, the inverse Fourier transforms includes for subbands having different subcarrier spacings, using the length of a second sequence corresponding to a subband with the minimum subcarrier spacing as the reference length; and for second sequences corresponding to subbands with non-minimum subcarrier spacings, selecting at least two second sequences, concatenating the at least two second sequences to form new N second sequences that each have the same length as the reference length, and performing inverse Fourier transforms on the new N second sequences.

In an embodiment, each first sequence is transmitted within a frequency-domain resource block, and the frequency-domain resource block includes Z subcarriers; and the number of data elements in each of the N second sequences is: M*s(n); or a value greater than or equal to M times the number of subcarriers in the frequency-domain resource block.

In an embodiment, a zero-frequency index of a first sequence in the inverse Fourier transform processing is within the range of a corresponding frequency-domain resource block; and zero-frequency indices when performing inverse Fourier transforms on different first sequences are different.

In an embodiment, zero-frequency indices fall at one subcarrier in frequency-domain resource blocks respectively in the inverse Fourier transform processing.

In an embodiment, the frequency-domain resource blocks include all or some of the frequency-domain resource blocks within the channel bandwidth; and the to-be-transmitted data includes all or some of the to-be-transmitted data within the channel bandwidth.

In an embodiment, the data transmission apparatus also includes a filter configured to filter the target time-domain data sequence. The filtering includes one of single-phase filtering or polyphase filtering.

In an embodiment, a filter function used in the polyphase filtering includes one of the following: a root raised cosine function, a raised cosine function, a rectangular function, or an isotropic orthogonal transform algorithm (IOTA) function.

In an embodiment, the data transmission apparatus also includes a windowing module configured to perform windowing on the target time-domain data sequence.

The data transmission apparatus of this embodiment is configured to perform the data transmission method of the embodiment shown in FIG. 1. The apparatus of this embodiment and the method of the embodiment shown in FIG. 1 have similar implementation principles and technical effects. The implementation principles and technical effects of the apparatus are not repeated here.

In an embodiment, FIG. 10 is a diagram illustrating the structure of a communication device according to embodiments of the present application. As shown in FIG. 10, the device of the present application includes a processor 1010, a memory 1020, and a communication module 1030. One or more processors 1010 may be provided in the device. FIG. 10 shows one processor 1010 as an example. One or more memories 1020 may be provided in the device. FIG. 10 shows one memory 1020 as an example. The processor 1010, the memory 1020, and the communication module 1030 of the device may be connected by a bus or otherwise. FIG. 10 uses connection by a bus as an example. In this embodiment, the communication device may be a base station or a terminal.

The memory 1020, as a computer-readable storage medium, may be configured to store software programs, computer-executable programs, and modules such as program instructions/modules corresponding to the device of any embodiment of the present application (such as the division module 910, the first transform module 920, the second transform module 930, and the transmission module 940 in the data transmission apparatus). The memory 1020 may include a program storage region and a data storage region. The program storage region may store an operating system and an application program required by at least one function. The data storage region may store data created according to the use of the device. Additionally, the memory 1020 may include a high-speed random-access memory and may also include a nonvolatile memory such as at least one disk memory, a flash memory, or another nonvolatile solid-state memory. In some examples, memories 1020 remote from the processor 1010 and connectable to the device via a network may be provided. Examples of the network include, but are not limited to, the Internet, an intranet, a local area network, a mobile communication network, and a combination thereof.

The device may be configured to perform the communication transmission method of any previous embodiment and has corresponding functions and effects.

Embodiments of the present application provide a storage medium storing computer-executable instructions which, when executed by a computer processor, cause the computer processor to perform a data transmission method. The method includes dividing to-be-transmitted data into N first sequences, where the n-th first sequence includes k(n) data elements, k(n) is a positive integer, n = 1, 2, ..., N, and N is an integer greater than or equal to 2; performing inverse Fourier transforms on the N first sequences separately to obtain N second sequences; performing inverse Fourier transforms on the N second sequences to obtain a target time-domain data sequence, where each of the inverse Fourier transforms includes extracting N data elements from the N second sequences in sequence and performing zero insertion and inverse Fourier transform on the N data elements in sequence, where each of the N data elements is extracted from a respective one of the N second sequences; and transmitting the target time-domain data sequence on a preconfigured time-frequency resource.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A data transmission method, comprising:
dividing to-be-transmitted data into N first sequences, wherein an n-th first sequence comprises k(n) data elements, k(n) is a positive integer, n = 1, 2, ..., N, and N is an integer greater than or equal to 2;
performing inverse Fourier transforms on the N first sequences separately to obtain N second sequences;
performing inverse Fourier transforms on the N second sequences to obtain a target time-domain data sequence, wherein each of the inverse Fourier transforms comprises extracting N data elements from the N second sequences in sequence and performing zero insertion and inverse Fourier transform on the N data elements in sequence, wherein each of the N data elements is extracted from a respective one of the N second sequences; and
transmitting the target time-domain data sequence on a preconfigured time-frequency resource.

2. The method of claim 1, wherein a channel bandwidth comprises N subbands that correspond to the N first sequences one to one.

3. The method of claim 1, wherein in response to an index of a subcarrier in a subband of N subbands being a zero-frequency index of a baseband, data elements extracted in sequence from second sequences corresponding to the subband are mapped to the zero-frequency index when performing inverse Fourier transforms on the data elements.

4. The method of claim 3, wherein the zero-frequency index of the baseband is a zero-frequency index of the channel bandwidth.

5. The method of claim 1, wherein the zero insertion comprises inserting Q(n) zeros between each two adjacent data elements of the N data elements.

6. The method of claim 1, wherein zeros of a same number are inserted between each two adjacent data elements of the N data elements.

7. The method of claim 1, wherein after the zero insertion on the N data elements, a spacing between two adjacent non-zero data elements in a frequency domain is equal to a bandwidth of a subband.

8. The method of claim 2, wherein the N subbands have a same bandwidth.

9. The method of claim 1, wherein a spacing between frequency-domain indices to which two adjacent data elements of the N data elements are mapped respectively is a bandwidth of a subband when performing inverse Fourier transforms on the N data elements.

10. The method of claim 1, wherein a spacing between frequency-domain indices to which any two data elements of the N data elements are mapped respectively is a subband spacing between two subbands corresponding to the two data elements when performing inverse Fourier transforms on the N data elements, wherein the subband spacing is a spacing between identical indices in the two subbands.

11. The method of claim 2, wherein zeros of different numbers are inserted between each two adjacent data elements of the N data elements, and the N subbands have different bandwidths.

12. The method of claim 1, wherein before performing the inverse Fourier transforms on the N first sequences separately, the method further comprises:
performing zero-padding at both ends on the N first sequences separately;
wherein each zero-padded first sequence comprises M*s(n) data elements, M is a positive integer, s(n) ≥ k(n), and a size of an inverse Fourier transform on each first sequence is M*s(n).

13. The method of claim 1, wherein before performing the inverse Fourier transforms on the N second sequences, the method further comprises:
performing frequency shifting on the N second sequences.

14. The method of claim 1, wherein M*s(n) inverse Fourier transforms are performed on the N second sequences.

15. The method of claim 1, wherein after the zero insertion on the N data elements and before the inverse Fourier transform on the N data elements, the method further comprises:
performing zero-padding at both ends on zero-inserted data elements separately.

16. The method of claim 12, wherein for the n-th first sequence,
in response to (*s*(*n*) - *k*(*n*))/*s*(*n*) >= *p * α,* M = 1; or
in response to (*s*(*n*) - *k*(*n*))/*s*(*n*) *< p* * *α,* M = 2;
wherein α denotes a roll-off factor of a root raised cosine filter in polyphase filtering, and p denotes an error coefficient.

17. The method of claim 1, wherein
in response to the n-th first sequence comprising *k(n)* = *a* * 2*^{b}* data elements, a subcarrier spacing of each of the inverse Fourier transforms on the N second sequences is 2*^{b}* times a subcarrier spacing of an n-th subband, and a size of the inverse Fourier transforms on each of the N second sequences satisfies *nifft = Nifft*(*n*)/2*^{b};*
wherein *Nifft*(*n*) denotes a total size of inverse Fourier transforms in the N first sequences, a and b are positive integers, and a is an odd number.

18. The method of claim 17, wherein the target time-domain data sequence is formed by concatenating time-domain data sequences generated from the inverse Fourier transforms, wherein the time-domain data sequences are concatenated in an overlap-add manner.

19. The method of claim 18, wherein the time-domain data sequences are concatenated at a concatenation interval of *Nifft*(*n*)/*M*/*s*(*n*)*.*

20. The method of claim 1, wherein performing the inverse Fourier transforms on the N second sequences to obtain the target time-domain data sequence comprises:
performing frequency-domain zero-padding and cyclic shifting on P other initial frequency-domain data sequences in sequence to obtain P other target frequency-domain data sequences; and
performing the inverse Fourier transforms on the N second sequences and the P other target frequency-domain data sequences to form the target time-domain data sequence;
wherein the P other target frequency-domain data sequences comprise data obtained by M-fold frequency-domain oversampling and are not comprised in data sequences generated from the to-be-transmitted data.

21. The method of claim 1, wherein a size of the inverse Fourier transforms on the N second sequences is greater than N, and a size of each of the inverse Fourier transforms on the N second sequences is greater than or equal to M.

22. The method of claim 1, wherein the inverse Fourier transforms comprise:
for subbands having different subcarrier spacings, using a length of a second sequence corresponding to a subband with a minimum subcarrier spacing as a reference length; or
for second sequences corresponding to subbands with non-minimum subcarrier spacings, selecting at least two second sequences, concatenating the at least two second sequences to form new N second sequences that each have a same length as the reference length, and performing inverse Fourier transforms on the new N second sequences.

23. The method of claim 12, wherein
each first sequence is transmitted within a frequency-domain resource block, and the frequency-domain resource block comprises Z subcarriers; and
a number of data elements in each of the N second sequences is:
M*s(n); or
a value greater than or equal to M times a number of subcarriers in the frequency-domain resource block.

24. A communication device, comprising a memory and at least one processor, wherein
the memory is configured to store at least one program; and
when executed by the at least one processor, the at least one program causes the at least one processor to perform the method of any one of claims 1 to 23.

25. A storage medium storing a computer program which, when executed by a processor, causes the processor to perform the method of any one of claims 1 to 23.
